(19) Europäisches Patentamt
European Patent Office
Office européen des brevets

(11) **EP 3 361 157 A1**

(12) **EUROPÄISCHE PATENTANMELDUNG**

(43) Veröffentlichungstag:
**15.08.2018 Patentblatt 2018/33**

(51) Int Cl.:
**F23R 3/00** [(2006.01)]

(21) Anmeldenummer: **18000121.6**

(22) Anmeldetag: **09.02.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD TN**

(30) Priorität: **10.02.2017   DE 102017202177**

(71) Anmelder: **Rolls-Royce Deutschland Ltd & Co KG**
**15827 Blankenfelde-Mahlow (DE)**

(72) Erfinder: **Clemen, Carsten**
**15749 Mittenwalde (DE)**

(54) **WANDBAUTEIL EINER GASTURBINE MIT VERBESSERTER KÜHLUNG**

(57)     Die Erfindung betrifft ein Wandbauteil einer Brennkammeranordnung, umfassend einen Wandbereich (19) mit einer der Brennkammer zugewandten Seite (11) und einer der Brennkammer abgewandten Seite (12), eine Vielzahl von ersten Effusionskühllöchern (13), welche die der Brennkammer abgewandte Seite (12) mit der der Brennkammer zugewandten Seite (11) mittels genau einem Durchgangskanal verbinden, und wenigstens ein modifiziertes zweites Effusionskühlloch (13') mit einem Hauptkanal (14) und einem Verzweigungskanal (15), wobei das modifizierte zweite Effusionskühlloch (13') eine gemeinsame Eingangsöffnung (16) und eine gemeinsame Ausgangsöffnung (17) aufweist.

Fig. 3

EP 3 361 157 A1

**Beschreibung**

Die vorliegende Erfindung betrifft ein Wandbauteil einer Brennkammeranordnung einer Gasturbine, insbesondere einer Fluggasturbine, mit einer verbesserten Kühlung.

Brennkammern von Gasturbinen sind aus dem Stand der Technik in unterschiedlichen Ausgestaltungen bekannt. Hierbei ist es bekannt, zum Kühlen eines Wandbauteils eine Vielzahl von sogenannten Effusionskühllöchern in das Wandbauteil einzubringen. Hierdurch kann auf der heißen Seite des Wandbauteils, d. h. der zur Brennkammer gerichteten Seite, ein Kühlluftfilm an den Wandbereich angelegt werden. Um thermische Schäden am Wandbauteil zu vermeiden, sollte der angelegte. Kühlluftfilm möglichst gleichmäßig an der brennraumzugewandten Seite des Wandbauteils vorgesehen sein. Die Kühlluftlöcher werden von der vom Brennraum abgewandten Seite mit Kühlluft versorgt. Die Kühlluftlöcher können beispielsweise mittels Laserbohren oder Funkenerodieren (EDM) hergestellt werden. Die Kühllöcher selbst haben üblicherweise einen Durchmesser in einer Größenordnung von kleiner 2 mm und können entweder senkrecht zur Oberfläche oder auch geneigt zur Oberfläche ausgebildet sein. In dem Wandbauteil der Brennkammer sind jedoch auch noch zusätzliche Einrichtungen oder Einbauten angeordnet, z. B. Zumischluftlöcher, welche in Form einer größeren Öffnung im Wandbauteil angeordnet sind, oder Gewindebolzen oder dergleichen zur Fixierung des Wandbauteils. Hierbei ist es jedoch selbstverständlich nicht möglich, an diesen Einrichtungen im Wandbereich Effusionskühllöcher vorzusehen. Insofern ergeben sich aus Platzgründen immer Bereiche am Wandbauteil, welche mittels Effusionskühllöchern nicht gekühlt werden können. Ferner erschwert auch die Anordnung derartiger Einrichtungen an der vom Brennraum abgewandten Seite eine effiziente Anströmung der Effusionskühllöcher, sodass zusätzliche Kühlluft vorgesehen werden muss, welche dann nicht mehr zur Mischung und damit zur Emissionskontrolle über die Zumischlöcher vorhanden ist.

Es ist daher Aufgabe der vorliegenden Erfindung, ein Wandbauteil einer Brennkammeranordnung einer Gasturbine bereitzustellen, welches bei einfachem Aufbau und einfacher, kostengünstiger Herstellbarkeit trotz der Anordnung verschiedener Einrichtungen am Wandbauteil eine effiziente Kühlung mittels Effusionskühllöchern ermöglicht.

Diese Aufgabe wird durch ein Wandbauteil mit den Merkmalen des Anspruchs 1 gelöst. Die Unteransprüche zeigen bevorzugte Weiterbildungen der Erfindung.

Das erfindungsgemäße Wandbauteil einer Brennkammeranordnung einer Gasturbine, insbesondere einer Fluggasturbine, weist demgegenüber den Vorteil auf, dass auch bei zusätzlichen Einbauten oder Einrichtungen oder dergleichen eine ausreichende Kühlung, insbesondere an in Strömungsrichtung hinter derartigen Einrichtungen liegenden Bereichen des Wandbauteils möglich ist. Hierbei weist das Wandbauteil einen Wandbereich mit einer zu einem Brennraum zugewandten Seite und einer vom Brennraum abgewandten Seite auf. Ferner ist eine Vielzahl von ersten Effusionskühllöchern vorgesehen, welche die vom Brennraum abgewandte Seite mit der dem Brennraum zugewandten Seite mittels genau eines Durchgangskanals verbinden und wenigstens ein modifiziertes zweites Effusionskühlloch mit einem Hauptkanal und einem Verzweigungskanal. Dabei weist das modifizierte zweite Effusionskühlloch nur genau eine Eingangsöffnung und genau eine Ausgangsöffnung auf. Mit anderen Worten haben der Hauptkanal und der Verzweigungskanal des modifizierten zweiten Effusionskühllochs eine gemeinsame Eingangsöffnung an der brennraumabgewandten Seite und eine gemeinsame Ausgangsöffnung an der brennraumzugewandten Seite. Somit kann durch das Vorsehen einer Verzweigung im Effusionskühlloch die Verzweigung im Wandbauteil so geführt werden, dass die Verzweigung Bereiche des Wandbauteils kühlt, welche bauraumbedingt ohne Effusionskühlloch vorgesehen sind. Damit kann eine verbesserte Kühlung, auch von Bereichen in Strömungsrichtung hinter einer Einrichtung oder dergleichen gekühlt werden. Der Verzweigungskanal zweigt somit vom Hauptkanal ab und mündet wieder in den Hauptkanal zurück, bevor der Hauptkanal an der Ausgangsöffnung zur Brennkammer austritt.

Weiter bevorzugt ist der Hauptkanal gegenüber dem Verzweigungskanal in Strömungsrichtung stromabwärts des Verzweigungskanals angeordnet. Somit kann der Verzweigungskanal nahe an ungekühlte Bereiche benachbart zu einer Einrichtung im Wandbauteil geführt sein.

Besonders bevorzugt ist ein Querschnitt der Ausgangsöffnung des modifizierten zweiten Effusionskühllochs größer oder gleich einer Summe eines minimalen ersten Querschnitts des Hauptkanals und eines minimalen zweiten Querschnitts des Verzweigungskanals. Hierdurch wird eine kontinuierliche Durchströmung durch den Hauptkanal und den Verzweigungskanal sichergestellt.

Weiter bevorzugt umfasst das Wandbauteil eine Einrichtung, insbesondere ein Zumischluftloch oder einen Gewindebolzen zur Fixierung des Wandbauteils. Das modifizierte zweite Effusionskühlloch ist dabei benachbart zur Einrichtung angeordnet. Besonders bevorzugt ist das modifizierte zweite Effusionskühlloch in Strömungsrichtung stromabwärts der Einrichtung angeordnet. Hierdurch kann der Verzweigungskanal in die Bereiche in Strömungsrichtung hinter der Einrichtung geführt werden und diese Bereiche kühlen.

Besonders bevorzugt bleiben ein erster Querschnitt des Hauptkanals und ein zweiter Querschnitt des Verzweigungskanals in Durchströmungsrichtung jeweils konstant.

Vorzugsweise ist der Hauptkanal geradlinig ausgebildet. Hierdurch weist der Hauptkanal des modifizierten zweiten Effusionskühllochs die gleiche Kühlleistung auf wie die ersten Effusionskühllöcher, wenn diese ebenfalls geradlinig ausgebildet sind.

Besonders bevorzugt ist der maximale erste Querschnitt des Hauptkanals größer als der maximale zweite Querschnitt des Verzweigungskanals. Hierdurch wird sichergestellt, dass ein Großteil der Luftmasse während des Kühlvorgangs durch den Hauptkanal strömt.

Der Hauptkanal ist vorzugsweise in Richtung der Durchströmungsrichtung in einem spitzen Winkel geneigt zu einer Oberfläche des Wandbauteils an der der Brennkammer zugewandten Seite vorgesehen.

Es sei angemerkt, dass der Hauptkanal geradlinig ausgebildet sein kann oder auch in einem Bogen durch das Wandbauteil geführt sein kann.

Weiter bevorzugt ist ein Abstand A von einer im Wandbauteil vorgesehenen Einrichtung von einem am weitesten stromabwärts gelegenen Punkt der Einrichtung zu einer Ausgangsöffnung eines modifizierten zweiten Effusionskühllochs durch die Gleichung:

$$A = x / 2 + x \tan a$$

bestimmt. Hierbei ist a ein mittlerer Lochneigungswinkel einer geraden Verbindungslinie zwischen einem Mittelpunkt der Einlassöffnung und einem Mittelpunkt der Auslassöffnung des modifizierten zweiten Effusionskühllochs und x eine Wanddicke des Wandbauteils. Der Lochneigungswinkel liegt vorzugsweise in einem Bereich von $15° \leq a \leq 45°$ und beträgt bevorzugt 20°. Die Wanddicke x liegt vorzugsweise in einem Bereich von $0 < x \leq 3$ mm und beträgt besonders bevorzugt 1,5 mm. Über den Abstand A kann vorzugsweise ein Rechteck oder ein Trapez oder ein Dreieck definiert werden, an welcher keine Ausgangsöffnungen von Effusionskühllöchern angeordnet sind. In diesem durch den Abstand A definierten Bereich können jedoch Verzweigungskanäle der modifizierten zweiten Effusionskühllöcher hindurchgeführt werden, um auch diesen Bereich stromabwärts der Einrichtung kühlen zu können.

Besonders bevorzugt ist das Wandbauteil ein additives Bauteil, welches mittels eines additiven Fertigungsverfahrens hergestellt ist.

Weiter bevorzugt ist die Austrittsöffnung größer als die Eintrittsöffnung.

Weiter bevorzugt sind mehrere zweite Effusionskühllöcher benachbart zu der am Wandbauteil vorgesehenen Einrichtung, wie z. B. einem Zumischloch, angeordnet.

Ferner betrifft die vorliegende Erfindung eine Gasturbine, insbesondere eine Fluggasturbine, mit einem erfindungsgemäßen Wandbauteil einer Brennkammeranordnung. Das Wandbauteil ist weiter bevorzugt eine Schindel einer Brennkammer einer Gasturbine. Die Brennkammer kann dabei vorzugsweise einwandig oder bevorzugt doppelwandig ausgebildet sein.

Nachfolgend werden bevorzugte Ausführungsbeispiele der Erfindung unter Bezugnahme auf die begleitende Zeichnung im Detail beschrieben. In der Zeichnung ist:

Figur 1    ein Gasturbinentriebwerk mit einem erfindungsgemäßen Wandbauteil einer Brennkammeranordnung,

Figur 2    eine schematische Schnittansicht einer Brennkammeranordnung, bei der ein erfindungsgemäßes Wandbauteil verwendbar ist, wobei im oberen Teil von Figur 2 eine doppelwandige Brennkammeranordnung dargestellt ist und im unteren Teil von Figur 2 eine einwandige Brennkammeranordnung dargestellt ist,

Figur 3    eine schematische Schnittansicht einer einwandigen Brennkammeranordnung gemäß einem ersten Ausführungsbeispiel der Erfindung,

Figur 4    eine schematische Draufsicht der zur Brennkammer gerichteten Seite des Wandbauteils von Figur 3,

Figur 5    eine schematische Schnittansicht eines Wandbauteils gemäß einem zweiten Ausführungsbeispiel der Erfindung,

Figur 6    eine schematische Schnittansicht eines Wandbauteils gemäß einem dritten Ausführungsbeispiel der Erfindung,

Figur 7    eine schematische Schnittansicht eines Wandbauteils gemäß einem vierten Ausführungsbeispiel der Erfindung, und

Figuren 8 und 9    schematische Darstellungen von zur Brennkammer gerichteten Seiten von Wandbauteilen mit zwei Beispielen einer möglichen Ausdehnung von Bereichen stromabwärts einer Einrichtung im Wandbauteil, an welchen die erfindungsgemäßen modifizierten zweiten Effusionskühllöcher eingesetzt werden können.

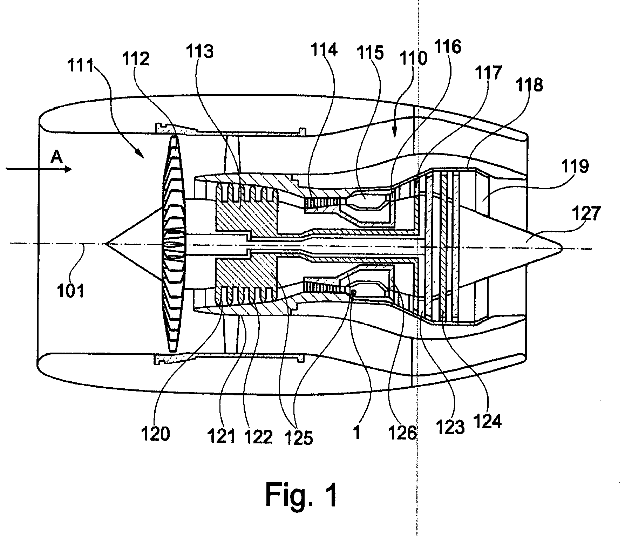

Ein Gasturbinentriebwerk 110 gemäß Figur 1 ist ein allgemein dargestelltes Beispiel einer Turbomaschine, bei der die Erfindung Anwendung finden kann. Das Gasturbinentriebwerk 110 ist in herkömmlicher Weise ausgebildet und umfasst in Strömungsrichtung hintereinander einen Lufteinlass 111, einen in einem Gehäuse umlaufenden Fan 112, einen Mitteldruckkompressor 113, einen Hochdruckkompressor 114, eine Brennkammer 115, eine Hochdruckturbine 116, eine Mitteldruckturbine 117 und eine Niederdruckturbine 118 sowie eine Abgasdüse 119, die sämtlich um eine zentrale Triebwerksmittelachse 101 angeordnet sind.

Der Mitteldruckkompressor 113 und der Hochdruckkompressor 114 umfassen jeweils mehrere Stufen, von denen jede eine in Umfangsrichtung verlaufende Anordnung fester stationärer Leitschaufeln 120 aufweist, die allgemein als Statorschaufeln bezeichnet werden und die radial nach innen vom Kerntriebwerksgehäuse 121 in einen ringförmigen Strömungskanal durch die Kompressoren 113, 114 vorstehen. Die Kompressoren weisen weiter eine Anordnung von Kompressorlaufschaufeln 122 auf, die radial nach außen von einer drehbaren Trommel oder Scheibe 125 vorstehen, die mit Naben 126 der Hochdruckturbine 116 beziehungsweise der Mitteldruckturbine 117 gekoppelt sind.

Die Turbinenabschnitte 116, 117, 118 weisen ähnliche Stufen auf, umfassend eine Anordnung von festen Leitschaufeln 123, die radial nach innen vom Gehäuse 121 in den ringförmigen Strömungskanal durch die Turbinen 116, 117, 118 vorstehen, und eine nachfolgende Anordnung von Turbinenschaufeln 124, die nach außen von einer drehbaren Nabe 126 vorstehen. Die Kompressortrommel oder Kompressorscheibe 125 und die darauf angeordneten Schaufeln 122 sowie die Turbinenrotomabe 126 und die darauf angeordneten Turbinenlaufschaufeln 124 drehen sich im Betrieb um die Triebwerksmittelachse 101.

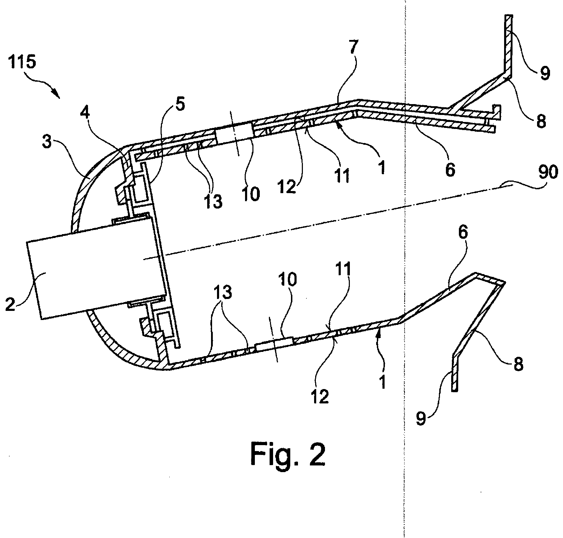

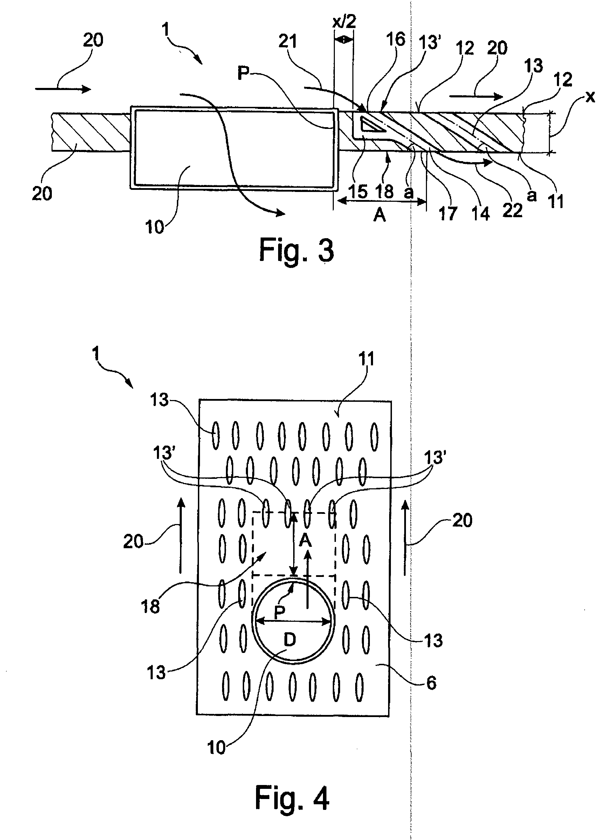

Figur 2 zeigt zwei mögliche Ausgestaltungen einer Brennkammer 115. Im oberen Teil von Figur 2 oberhalb einer Mittellinie 90 der Brennkammer 115 ist eine doppelwandige Konstruktion mit einer äußeren Wand 7 und einer inneren Wand 6 dargestellt, wohingegen im unteren Teil von Figur 2 (unterhalb der Mittellinie 90) eine einwandige Konstruktion mit nur einer Wand 6 dargestellt ist. Die Brennkammer 115 umfasst eine Treibstoffdüse 2, einen Brennkammerkopf 3, eine Kopfplatte 4 und ein Hitzeschild 5. Das Bezugzeichen 8 stellt eine Brennkammeraufhängung dar, welche einen Flansch 9 aufweisen kann. In der der Brennkammer am nächsten gelegenen Wand 6 sind jeweils eine Vielzahl von Effusionskühllöchern 13 dargestellt. Die der Brennkammer am nächsten gelegene Wand 6 bildet hierbei ein erfindungsgemäßes Wandbauteil 1, welches schematisch in den Figuren 3 und 4 dargestellt ist.

Figur 3 zeigt schematisch eine Schnittansicht durch ein Wandbauteil 1 der Brennkammer 115. Das Wandbauteil weist eine Dicke x auf und ist beispielsweise eine Brennkammerschindel.

Das Wandbauteil 1 umfasst einen Wandbereich 19 mit einer der Brennkammer zugewandten Seite 11 und einer der Brennkammer abgewandten Seite 12. Die der Brennkammer zugewandte Seite 11 ist auch als heiße Seite bekannt und die der Brennkammer abgewandte Seite wird auch als kalte Seite bezeichnet.

Das Wandbauteil 1 umfasst ferner eine Vielzahl von ersten Effusionskühllöchern 13, welche die der Brennkammer abgewandten Seite 11 mit der der Brennkammer zugewandten Seite 12 mittels genau eines Durchgangskanals verbindet.

Das Wandbauteil 1 umfasst ferner wenigstens ein modifiziertes zweites Effusionskühlloch 13', welches einen Hauptkanal 14 und einen Verzweigungskanal 15 umfasst. Dabei weist das modifizierte zweite Effusionskühlloch 13' eine gemeinsame Eingangsöffnung 16 und eine gemeinsame Ausgangsöffnung 17 auf.

Somit ist ein modifiziert gebildetes zweites Effusionskühlloch 13' vorgesehen, welches neben dem Hauptkanal 14 einen Verzweigungskanal 15 aufweist. Der Verzweigungskanal 15 zweigt vom Hauptkanal 14 ab und mündet wieder in diesen, bevor der Hauptkanal an der Ausgangsöffnung 17 an der zur Brennkammer zugewandten Seite 11 mündet.

Wie aus Figur 3 ersichtlich ist, ist das modifizierte zweite Effusionskühlloch 13' unmittelbar benachbart zu einer Einrichtung 10 in dem Wandbauteil 1 angeordnet. Die Einrichtung 10 ist in diesem Ausführungsbeispiel ein Zumischluftloch. Da das Zurhischluftloch verhindert, dass Effusionskühllöcher im Bereich des Zumischluftlochs vorgesehen werden können, ergibt sich in Strömungsrichtung 20 an der der Brennkammer zugewandten Seite 11 ein Bereich 18 ohne Ausgangsöffnungen. Wie in Figur 4 gezeigt, ist der Bereich ohne Ausgangsöffnungen in diesem Ausführungsbeispiel viereckig, wobei der Bereich 18 von einem in Strömungsrichtung 20 stromabwärts von dem am weitesten stromabwärts gelegenen Punkt P der Einrichtung 10 bestimmt wird. Die als Zumischloch ausgebildete Einrichtung 10 weist einen Durchmesser D auf und steht etwas in den Brennraum vor. Der Abstand A zu den vom Punkt P in Strömungsrichtung 20 am nächsten liegenden Ausgangsöffnungen der Effusionskühllöcher 13 berechnet sich dabei mittels folgender Gleichung:

$$A = x / 2 + x \tan a,$$

wobei a der Winkel des Effusionskühllochs relativ zu der zur Brennkammer gerichteten Seite 11 ist und x die Dicke des Wandbauteils ist.

Wie aus Figur 3 ersichtlich ist, ist die Eingangsöffnung 16 in einem Abstand von x / 2 zum Punkt P der Einrichtung 10 angeordnet.

Um auch eine ausreichende Kühlung des Bereichs 18 zu ermöglichen, sind in diesem Ausführungsbeispiel stromabwärts benachbart zur Einrichtung 10 vier modifizierte zweite Effusionskühllöcher 13' vorgesehen. Wie aus Figur 3 ersichtlich ist, ist der Verzweigungskanal 15 jedes modifizierten zweiten Effusionskühllochs 13' derart vorgesehen, dass der Verzweigungskanal 15 möglichst nahe zur Einrichtung 10 und möglichst nahe dem Bereich 18 angeordnet ist. Hierdurch können die Bereiche, welche in Strömungsrichtung 20 unmittelbar nach der Einrichtung 10 angeordnet sind, mittels des Verzweigungskanals 15 gekühlt werden. Somit kann auch eine Temperatur von Bereichen des Wandbauteils 1 in Strömungsrichtung 20 hinter Hindernissen oder Einrichtungen 10 effizient gekühlt werden.

Wie weiter aus Figur 4 ersichtlich ist, sind vier modifizierte zweite Effusionskühllöcher 13' vorgesehen, welche den Bereich 18 ohne Ausgangsöffnungen, der in Durchströmungsrichtung nach der Einrichtung 10 liegt, effizient zu kühlen. Durch den rechten Winkel im Verzweigungskanal 15 kann hierbei eine relativ lange Kühlungsstrecke im Bereich 18 erreicht werden.

Wie aus Figur 3 ersichtlich ist, ist bei dem modifizierten zweiten Effusionskühlloch 13' ein Durchmesser des Hauptkanals 14 genauso groß wie ein normaler Durchmesser eines ersten Effusionskühllochs 13. Somit kann die Kühlungsleistung des Hauptkanals 14 gleich groß wie die eines ersten Effusionskühllochs 13 sein.

Das Wandbauteil 1 wird vorzugsweise mittels eines additiven Verfahrens hergestellt, sodass die modifizierten zweiten Effusionskühllöcher 13' möglichst einfach und kostengünstig herstellbar sind.

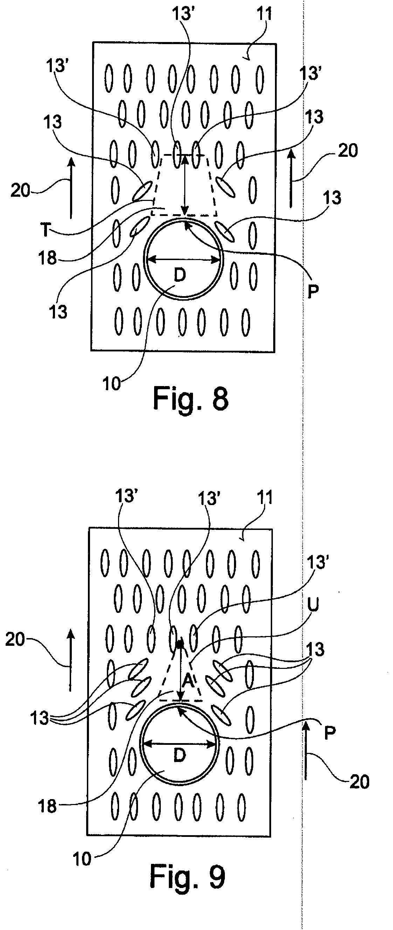

Die Figuren 8 und 9 zeigen alternative Ausgestaltungen des erfindungsgemäßen Wandbauteils 1. In Figur 8 sind drei modifizierte zweite Effusionskühllöcher 13' derart angeordnet, dass der Bereich 18 in Durchströmungsrichtung 20 hinter der Einrichtung 10 eine Trapezform T aufweist. Wie aus Figur 8 ersichtlich ist, sind dabei insgesamt drei modifizierte zweite Effusionskühllöcher 13' unmittelbar benachbart zur Einrichtung 10 vorgesehen. Die restlichen Effusionskühllöcher 13 sind als einkanalige Effusionskühllöcher vorgesehen. In Figur 9 ist eine alternative Ausgestaltung dargestellt, bei der der Bereich 18 ohne Ausgangsöffnungen eine Dreiecksform U aufweist. Hierbei sind insgesamt drei modifizierte zweite Effusionskühllöcher 13' benachbart zur Einrichtung 10 vorgesehen.

Somit kann, wie in Figur 3 dargestellt, eine verbesserte Kühlung von Bereichen 18 an dem Wandbauteil 1 ermöglicht werden, welche in Strömungsrichtung 20 hinter einer Einrichtung 10, wie beispielsweise einem Zumischloch, liegen. Hierbei strömt Kühlluft, wie in Figur 3 durch den Pfeil 21 angedeutet, in die Eingangsöffnung 16 ein und strömt dann sowohl durch den Hauptkanal 14 als auch den Verzweigungskanal 15. Die beiden Luftströme durch den Hauptkanal 14 und den Verzweigungskanal 15 werden vor der Ausgangsöffnung 17 wieder vereinigt und treten dann als Kühlluftfilm, wie in Figur 3 durch den Pfeil 22 angedeutet, an der zur Brennkammer gerichteten Seite 11 des Wandbauteils 1 aus.

Der Verzweigungskanal 15 wird dabei möglichst nahe an den Bereich 18 ohne Ausgangsöffnungen gelegt, um eine verbesserte Kühlung dieser Bereiche 18 zu ermöglichen.

Wie in Figur 3 gezeigt, liegen dabei der Hauptkanal 14 und der Verzweigungskanal 15 in einer gemeinsamen Ebene, welche senkrecht zum Wandbauteil 1 ist. Der Verzweigungskanal weist dabei einen rechten Winkel auf, sodass eine relativ lange Strecke des Verzweigungskanals 15 parallel zur der Brennkammer zugewandten Seite 11 geführt ist, um den Bereich 18 optimal kühlen zu können. Weiterhin ist der Hauptkanal 14 in Strömungsrichtung 20 stromabwärts des Verzweigungskanals angeordnet.

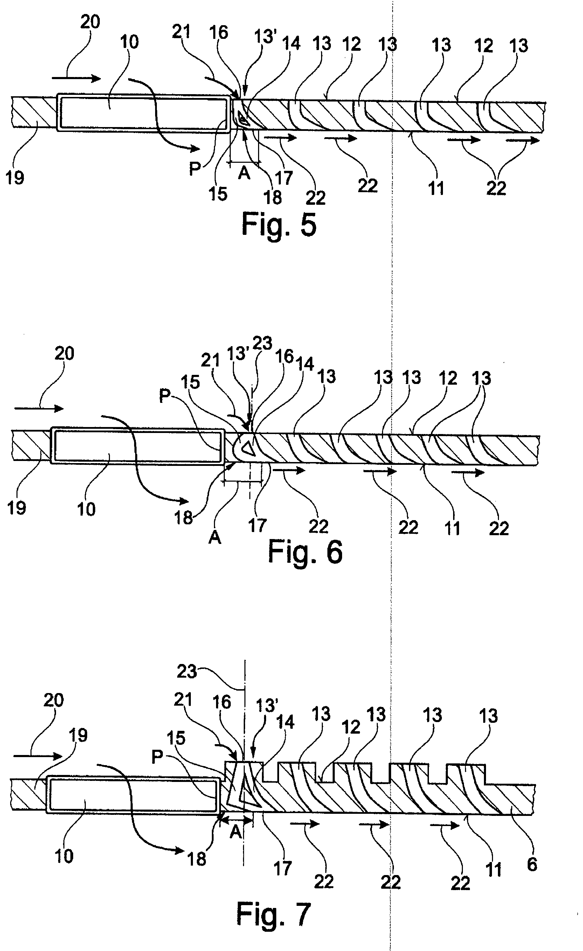

Figur 5 zeigt ein Wandbauteil 1 gemäß einem zweiten Ausführungsbeispiel der vorliegenden Erfindung. Im Unterschied zum ersten Ausführungsbeispiel ist beim zweiten Ausführungsbeispiel der Verzweigungskanal 15 bogenförmig ausgebildet. Hierbei ist auch der Hauptkanal 14 bogenförmig ausgebildet. Hierdurch ergeben sich reduzierte Verluste während der Durchströmung der modifizierten zweiten Effusionskühllöcher 13'. Wie aus Figur 5 ersichtlich ist, sind auch die anderen ersten Effusionskühllöcher 13 bogenförmig gebildet.

Figur 6 zeigt ein drittes Ausführungsbeispiel eines Wandbauteils 1, wobei im Unterschied zum zweiten Ausführungsbeispiel beim dritten Ausführungsbeispiel der Verzweigungskanal 15 einen Teilbereich aufweist, welcher entgegen der Strömungsrichtung 20 geführt ist und somit nahe an die Einrichtung 10 heranreicht. Wie in Figur 6 schematisch dargestellt, liegt der Verzweigungskanal 15 zumindest teilweise stromaufwärts einer Senkrechten 23 zum Wandbauteil, sodass eine Kühlung möglichst nahe der Einrichtung 10 möglich ist.

Figur 7 zeigt ein Wandbauteil 1 gemäß einem vierten Ausführungsbeispiel der Erfindung. Das Wandbauteil des vierten Ausführungsbeispiels entspricht im Wesentlichen dem des dritten Ausführungsbeispiels, wobei im Unterschied dazu der Verzwfeigungskanal 15 mit einem rechten Winkel gebildet ist. Hierdurch kann eine verbesserte Kühlung des Bereichs 18 an der Seite 11 erreicht werden.

## Bezugszeichenlist

| 1 | Wandbauteil |
|---|---|
| 2 | Treibstoffdüse |
| 3 | Brennkammerkopf |
| 4 | Kopfplatte |
| 5 | Hitzeschild |
| 6 | Innere Brennkammerwand |
| 7 | Äußere Brennkammerwand |
| 8 | Brennkammeraufhängung |
| 9 | Flansch |
| 10 | Einrichtung |
| 11 | der Brennkammer zugewandte Seite |
| 12 | der Brennkammer abgewandte Seite |
| 13 | Erstes Effusionskühlloch |
| 13' | Modifiziertes zweites Effusionskühlloch |
| 14 | Hauptkanal |
| 15 | Verzweigungskanal |
| 16 | Eingangsöffnung |

| | |
|---|---|
| 17 | Ausgangsöffnung |
| 18 | Bereich ohne Ausgangsöffnungen |
| 19 | Wandbereich |
| 20 | Strömungsrichtung |
| 21 | Lufteintritt |
| 22 | Luftaustritt |
| 23 | Senkrechte |
| 101 | Triebwerksmittelachse |
| 110 | Gasturbinentriebwerk / Kerntriebwerk |
| 111 | Lufteinlass |
| 112 | Fan |
| 113 | Mitteldruckkompressor (Verdichter) |
| 114 | Hochdruckkompressor |
| 115 | Brennkammer |
| 116 | Hochdruckturbine |
| 117 | Mitteldruckturbine |
| 118 | Niederdruckturbine |
| 119 | Abgasdüse |
| 120 | Leitschaufeln |
| 121 | Kerntriebwerksgehäuse |
| 122 | Kompressorlaufschaufeln |
| 123 | Leitschaufeln |
| 124 | Turbinenschaufeln |
| 125 | Kompressortrommel oder -scheibe |
| 126 | Turbinenrotornabe |
| 127 | Auslasskonus |

| | |
|---|---|
| A | Abstand zwischen der Einrichtung und der Ausgangsöffnung des modifizierten zweiten Effusionskühllochs |
| D | Durchmesser des Zumischluftloches |
| P | Punkt der Einrichtung 10, der am weitesten stromabwärts liegt |
| T | Trapezform |
| U | Dreiecksform |
| x | Dicke des Wandbauteils |
| a | Spitzer Winkel des Austritts des modifizierten zweiten Effusionskühllochs |

**Patentansprüche**

1. Wandbauteil einer Brennkammeranordnung, umfassend

   - einen Wandbereich (19) mit einer der Brennkammer zugewandten Seite (11) und einer der Brennkammer abgewandten Seite (12),
   - eine Vielzahl von ersten Effusionskühllöchern (13), welche die der Brennkammer abgewandte Seite (12) mit der der Brennkammer zugewandten Seite (11) mittels genau einem Durchgangskanal verbinden, und
   - wenigstens ein modifiziertes zweites Effusionskühlloch (13') mit einem Hauptkanal (14) und einem Verzweigungskanal (15),
   - wobei das modifizierte zweite Effusionskühlloch (13') eine gemeinsame Eingangsöffnung

(16) und eine gemeinsame Ausgangsöffnung (17) aufweist.

2. Wandbauteil nach Anspruch 1, wobei der Hauptkanal (14) in Strömungsrichtung (20) am Wandbauteil stromabwärts des Verzweigungskanals (15) angeordnet ist.

3. Wandbauteil nach einem der vorhergehenden Ansprüche, wobei ein Querschnitt der Ausgangsöffnung (17) größer oder gleich einer Summe der minimalen Querschnitte des Hauptkanals (14) und des Verzweigungskanals (15) ist.

4. Wandbauteil nach einem der vorhergehenden Ansprüche, ferner umfassend eine Einrichtung (10), wobei das modifizierte zweite Effusionskühlloch benachbart der Einrichtung (10), insbesondere stromabwärts der Einrichtung (10), angeordnet ist.

5. Wandbauteil nach Anspruch 4, wobei die Einrichtung (10) ein Zumischluftloch ist, welches durch das Wandbauteil hindurchgeht oder ein Gewindebolzen zur Befestigung des Wandbauteils an der der Brennkammer abgewandten Seite (12) ist.

6. Wandbauteil nach einem der vorhergehenden Ansprüche, wobei ein erster Querschnitt des Hauptkanals (14) und ein zweiter Querschnitt des Verzweigungskanals (15) in Durchströmungsrichtung konstant bleiben.

7. Wandbauteil nach einem der vorhergehenden Ansprüche, wobei der Hauptkanal (14) geradlinig ausgeführt ist oder wobei der Hauptkanal (14) bogenförmig ausgeführt ist.

8. Wandbauteil nach einem der vorhergehenden Ansprüche, wobei der maximale erste Querschnitt des Hauptkanals (14) größer ist als der maximale zweite Querschnitt des Verzweigungskanals (15).

9. Wandbauteil nach einem der vorhergehenden Ansprüche, wobei der Hauptkanal (14) in einem spitzen Winkel (a) zur der Brennkammer zugewandten Seite (11) aus dem Wandbauteil austritt.

10. Wandbauteil nach einem der vorhergehenden Ansprüche, wobei der Verzweigungskanal (15) einen rechten Winkel aufweist.

Fig. 1

Fig. 2

## Fig. 3

## Fig. 4

Fig. 5

Fig. 6

Fig. 7

Fig. 8

Fig. 9

Europäisches
Patentamt

European
Patent Office

Office européen
des brevets

# EUROPÄISCHER RECHERCHENBERICHT

Nummer der Anmeldung

EP 18 00 0121

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | EP 1 617 146 A2 (UNITED TECHNOLOGIES CORP [US]) 18. Januar 2006 (2006-01-18) * Absatz [0019] - Absatz [0021]; Abbildungen 2-8 * ----- | 1-4,6-10 | INV. F23R3/00 |
| Y | US 5 370 499 A (LEE CHING-PANG [US]) 6. Dezember 1994 (1994-12-06) * Spalte 5, Zeile 45 - Spalte 6, Zeile 33; Abbildungen 4,5 * ----- | 1-4,6-10 | |
| A | EP 2 995 864 A1 (UNITED TECHNOLOGIES CORP [US]) 16. März 2016 (2016-03-16) * Absätze [0045], [0048]; Abbildungen 8, 9 * ----- | 1 | |
| A | US 2012/114868 A1 (BUNKER RONALD SCOTT [US] ET AL) 10. Mai 2012 (2012-05-10) * Absatz [0042]; Abbildungen 11,12 * ----- | 1 | |

RECHERCHIERTE
SACHGEBIETE (IPC)

F23R

Der vorliegende Recherchenbericht wurde für alle Patentansprüche erstellt

| Recherchenort | Abschlußdatum der Recherche | Prüfer |
|---|---|---|
| Den Haag | 18. Juni 2018 | Harder, Sebastian |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 18 00 0121

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-06-2018

| Im Recherchenbericht angeführtes Patentdokument | Datum der Veröffentlichung | Mitglied(er) der Patentfamilie | Datum der Veröffentlichung |
|---|---|---|---|
| EP 1617146 A2 | 18-01-2006 | AU 2005203024 A1<br>EP 1617146 A2<br>KR 20060050057 A<br>SG 119289 A1<br>US 2006005543 A1 | 02-02-2006<br>18-01-2006<br>19-05-2006<br>28-02-2006<br>12-01-2006 |
| US 5370499 A | 06-12-1994 | KEINE | |
| EP 2995864 A1 | 16-03-2016 | EP 2995864 A1<br>US 2016069569 A1 | 16-03-2016<br>10-03-2016 |
| US 2012114868 A1 | 10-05-2012 | CN 102536465 A<br>DE 102011055242 A1<br>FR 2967204 A1<br>JP 2012102731 A<br>US 2012114868 A1 | 04-07-2012<br>10-05-2012<br>11-05-2012<br>31-05-2012<br>10-05-2012 |

EPO FORM P0461

Für nähere Einzelheiten zu diesem Anhang : siehe Amtsblatt des Europäischen Patentamts, Nr.12/82